# EUROPEAN PATENT APPLICATION

(11) **EP 4 458 586 A1**
(43) Date of publication of application: **06.11.2024**
(21) Application number: 24173527.3
(22) Date of filing: 30.04.2024
(51) Int. Cl.: B60B 7/00, B60B 7/06, B60B 7/20

(54) **FLOATING HUB COVER DEVICE FOR A VEHICLE WHEEL**

(30) Priority: 04.05.2023 IT 202300008781
(71) Applicant: SPM S.p.A., 21030 Brissago Valtravaglia (IT)
(72) Inventor: BERUTTI, Giovanni, Brissago Valtravaglia (IT)
(74) Representative: Colombo, Stefano Paolo

(57) **Abstract**

A hub cover device for a wheel of a vehicle is described, said hub cover device comprising: a hub engagement member with a housing for a bearing, the engagement member comprising a disc with a outer face and an inner face; a support member for supporting a logo, the support member comprising a head and a stem and being configured to rotate freely relative to the engagement member; and an eccentric mass, configured to engage integrally with the stem of the support member and bring the support member back into a predetermined position, wherein a circular frame protrudes axially from the outer face of the disc of the engagement member and wherein a circular channel is formed in the inner face of the head of the support member so as to accommodate the circular frame of the engagement member.

## Description

### FIELD OF THE INVENTION

The present invention relates to the sector of vehicles and in particular the sector of wheels for vehicles. Even more particularly it relates to the sector of hubcaps or hub covers for vehicle wheels.

### PRIOR ART

As is known, vehicle wheels generally comprise a rim and a tyre mounted on the rim. The rim is in turn fixed onto a hub. In the centre of a wheel rim there is a hole. Generally, the hole in the centre of the rim is closed in a removable manner by means of a hub cover. The hub cover may be anonymous, namely not bear any indication of the manufacturer of the vehicle, rim or tyre. In other cases, the hub cover is stamped with a logo or a trademark which identifies the vehicle or rim manufacturer or the vehicle model.

As is known, generally a trademark has a precise orientation. Considering that a hub cover rotates together with the wheel with which it is associated, when the vehicle is at a standstill, the trademark on the hub cover is frequently oriented in a non-optimum manner. For example, it is rotated through 90° or 180° with respect to the ideal orientation.

This situation is negatively regarded by the vehicle (or rim) manufacturers and often the vehicle owners.

EP 2607096 describes a hub cover for a vehicle wheel, configured to maintain a predetermined orientation. EP 2607096 also describes a solution which would limit the entry of dust and moisture inside the hub cover and in particular into the bearing.

EP 3 628 508 A1 discloses a hub cover for a wheel of a vehicle.

### SUMMARY OF THE INVENTION

For the purposes of the present description and the attached claims, the expression "logo" will be understood as meaning any decorative and/or identifying element. By way of a non-limiting example, a logo could for example identify the manufacturer of the vehicle or the manufacturer of a part of the vehicle (for example the rim, or tyre or braking system manufacturer) or the vehicle owner, or the vehicle model, or could consist of any writing, or a vehicle identifier, or could comprise the logo of a manufacturer of electronic devices such as telephones or the like.

The Applicant has defined the aim of providing a hub cover which has a greater capacity to keep clean the internal part of the hub cover and in particular the bearing of the hub cover itself.

According to one aspect of the invention a hub cover device for a wheel of a vehicle is provided. The vehicle may be a motorcar, a lorry, a motorcycle or a scooter. The hub cover device comprises:
a hub engagement member with a housing for a bearing, the hub engagement member comprising a disc with an outer face and inner face;
a support member for supporting a logo, the support member comprising a head and a stem and being configured to rotate freely relative to the engagement member; and
an eccentric mass, configured to engage integrally with the stem of the support member and to bring the support member back into a predetermined position;
wherein a circular frame protrudes axially from the outer face of the disc of the engagement member, and
wherein a circular channel is formed in the inner face of the head of the support member so as to accommodate the circular frame of the engagement member.

In embodiments, the circular channel comprises a surface radially inclined outwards in the direction towards the engagement member.

In embodiments, the circular frame has a substantially triangular shape in cross-section and comprises a surface inclined radially outwards in the direction of the support member.

In embodiments, the hub cover device further comprises a circular spur protruding axially from the inner face of the head of the support member, and wherein the circular spur is configured to engage inside a first circular cavity of the disc of the engagement member.

In embodiments, the circular spur comprises a surface radially inclined outwards in the direction of the engagement member.

In embodiments, the disc of the engagement member comprises a first circular frame and a second circular frame which delimit the first circular cavity.

In embodiments, the housing protrudes from the inner face of the disc and the first circular frame protrudes from the outer face of the disc beyond the housing of the bearing.

In embodiments, the first frame has a substantially rectangular or square cross-section.

In embodiments, the first circular frame has a width of between about 1 mm and about 2 mm.

In embodiments, the stem of the support member terminates in a slotted free end; near the free end of the stem there are two diametrically opposite mouldings configured to engage with two corresponding axial slots in a central hole of the eccentric mass.

### BRIEF DESCRIPTION OF THE FIGURES

The invention will become clearer from the following description, provided purely by way of a non-limiting example, to be read with reference to the attached figures, in which:
Fig. 1 is a first, exploded, schematic view of the main components of the hub cover according to an embodiment of the present invention;
Fig. 2 is a second, exploded, schematic view of the main components of the hub cover according to an embodiment of the present invention;
Fig. 3.1 is a cross-sectioned view of the hub cover of Figures 1 and 2;
Fig. 3.2 is an enlarged detail of Fig. 3.1;
Figs. 4.1, 4.2 and 4.3 are three different views of the hub engagement member;
Figs. 5.1, 5.2 and 5.3 are three different views of the logo support member;
Figs. 6.1, 6.2 and 6.3 are three different views of an eccentric mass.

### DETAILED DESCRIPTION

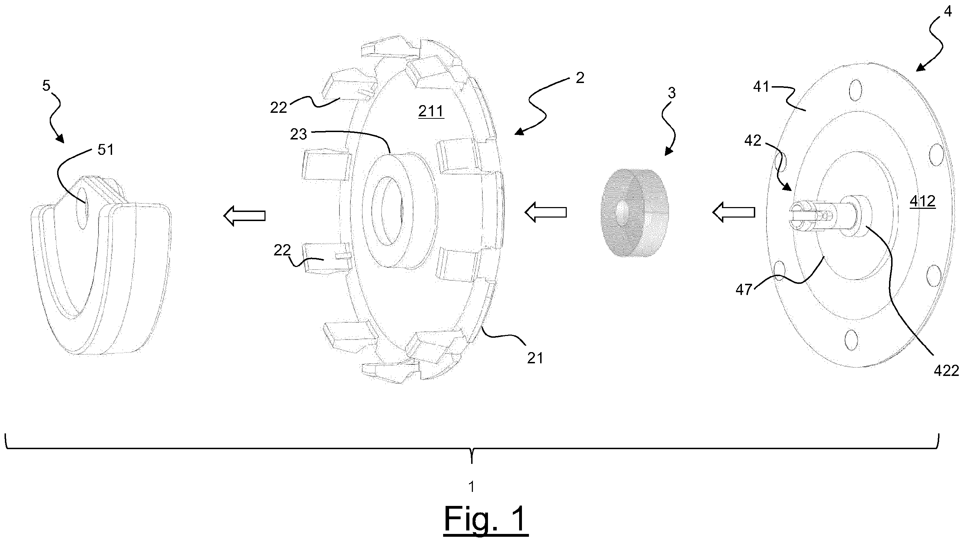

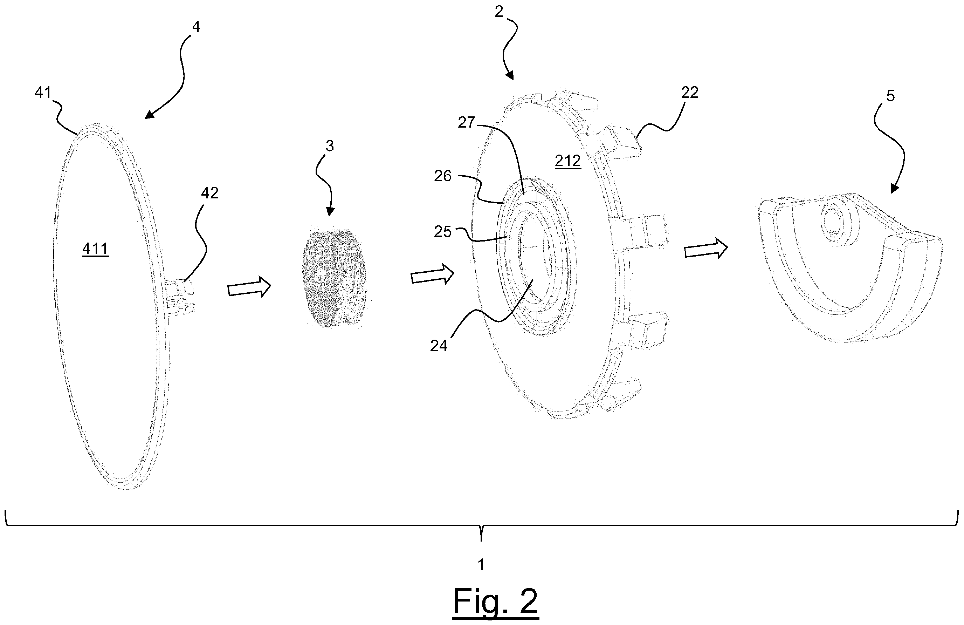

The hub cover device 1 according to the present invention comprises four main components, as shown in Figures 1 and 2. Each of these main elements will be described in detail below.

The hub cover device 1 comprises a hub engagement member 2, also referred to in short as "engagement member 2". The engagement member 2 comprises a circular disc 21 with an inner face 211 and an outer face 212. Along the periphery of the circular disc 21 there are engaging lugs 22 which are configured to engage with the hub of a vehicle wheel. Figures 1, 2, 4.1, 4.2 and 4.3 show ten engaging lugs 22, but the number could be different from ten, i.e. more or less. The engaging lugs 22 extend substantially at 90° from the inner face 211.

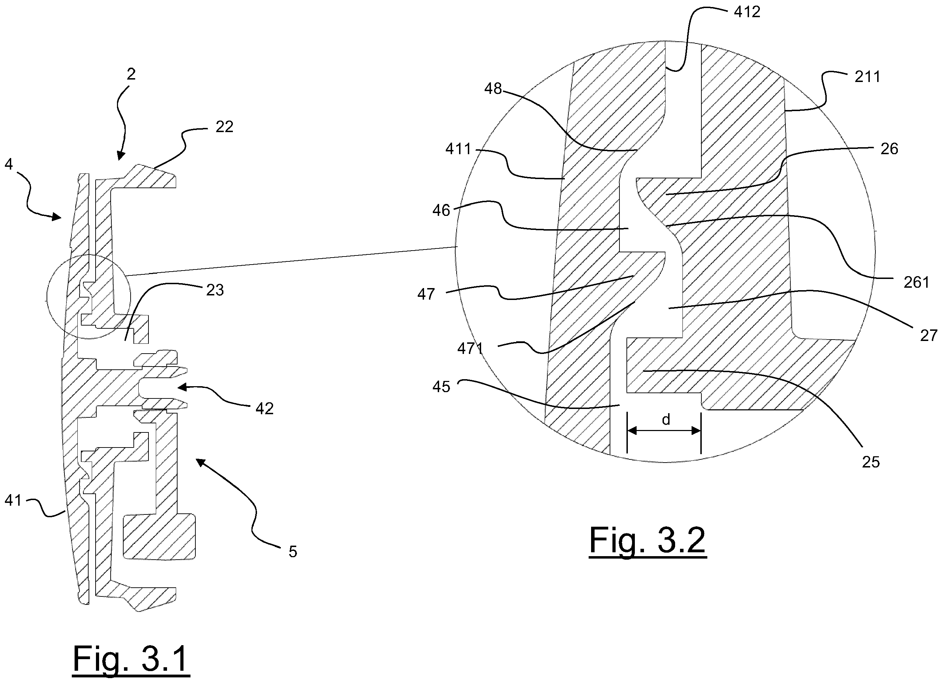

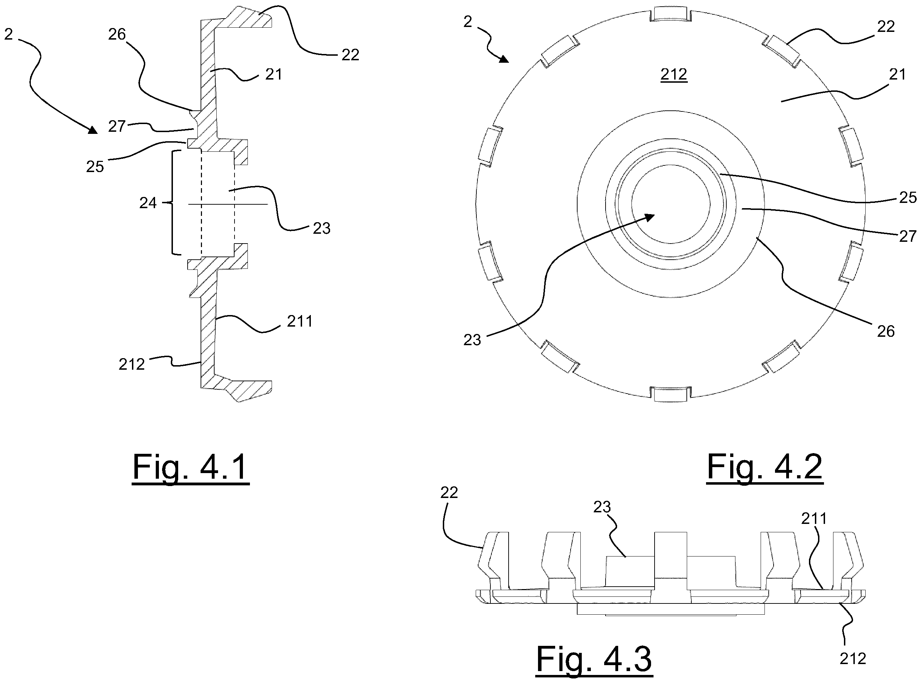

The disc 21 comprises a housing 23 for a bearing 3 which may for example be of the ball bearing or roller bearing type. The housing 23 for the bearing 3 has a cylindrical shape and is partially closed at the bottom. The housing 23 for the bearing 3 extends from the inner face 211 of the disc 21, as shown in Figures 3.1 and 4.1. The bearing 3 is inserted via a hole 24 in the disc 21 (Fig. 2), from the outer face 212 towards the inner face 211, and remains on the partially closed bottom of the housing 23.

The hole 24 in the disc through which the bearing is inserted may have a diameter of about 10-20 mm, for example about 15-17 mm.

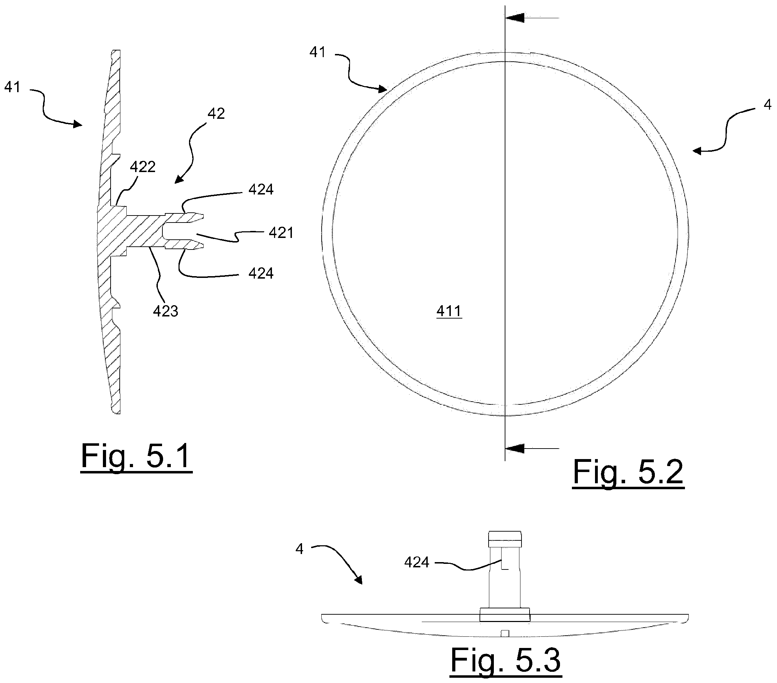

According to embodiments, a first circular frame 25 protruding axially outwards from the outer face 212 of the disc 21 is formed substantially around the central hole 24 of the disc 21. For example, as shown in Figures 3.1, 3.2 and 5.1, the first circular frame 25 has a substantially rectangular cross-section. The first circular frame 25 protrudes from the outer face of the disc 21 by about 1-2 mm, for example about 1.75 mm.

A second circular frame 26 is formed radially on the outside of the first circular frame 25. Preferably, the second circular frame 26 is substantially concentric with the first circular frame 25.

Preferably, the second circular frame 26 protrudes axially from the outer face 212 of the disc 21. According to embodiments, the second circular frame 26 protrudes axially from the outer face 212 of the disc 21 by a length substantially the same as the length of the first circular frame 25.

According to embodiments, the second circular frame 26 has a substantially triangular shape in cross-section, as shown in Figures 3.1, 3.2 and 5.1. In one embodiment, the triangle is substantially a rectangular triangle with its hypotenuse directed towards the centre of the disc. The angle of inclination may be equal to about 45°.

The second circular frame 26 may have a diameter of between 25 and 30 mm, for example about 27-29 mm.

A first circular cavity 27 is defined between the first circular frame 25 and the second circular frame 26.

Advantageously, the engagement member 2 is made, at least partly of a thermoplastic material, for example by means of injection moulding. Alternatively, it may be made of a composite material or a metallic material, such as aluminium or aluminium alloy.

The hub cover device 1 further comprises a support member 4 for supporting a logo, shown in Figures 5.1, 5.2 and 5.3. Preferably, the support member 4 is mushroom-shaped with a head 41 and a stem 42.

The head 41 is circular, flattened, but rounded. The head 41 comprises an outer face 411 and an inner face 412. The inner face 412 of the head 41 is configured to face the outer face 212 of the engagement member 2. According to embodiments, the inner face 412 of the head 41 is substantially flat over its radially outermost part.

According to embodiments, the outer edge of the head 41 forms a rim which surrounds the outer edge of the disc of the engagement member or in any case protrudes radially with respect to the disc 21 of the engagement member 2.

According to embodiments, the outer face 411 of the support member 4 is slightly rounded, except possibly for the radially outer zone.

The stem 42 of the support member 4 has a substantially circular cross-section and terminates in a slotted free end 421. The first section 422 of the stem 42 has a greater cross-section so as to ensure solidity in the root zone. The intermediate section 423 of the stem 42 has a smaller cross-section than the free end 421. Two diametrically opposite mouldings 424 are present near the free end of the stem.

A circular spur 47 protruding axially from the inner face 412 of the head 41 of the support member 4 is present in a radially outer position with respect to the stem 42. Preferably, the circular spur 47 is concentric with the stem 42 and the centre of the head 41.

The circular spur 47 may have a shape, in cross-section, which is entirely similar to the shape of the second circular frame 26. According to embodiments, the circular spur 47 has a substantially triangular shape in cross-section, as shown in Figures 3.1, 3.2 and 5.1. In one embodiment, the triangle is substantially a rectangular triangle with its hypotenuse directed towards the centre of the head. The angle of inclination may be equal to about 45°.

The circular spur 47 protrudes from the inner face 412 of the head by about 1-2 mm, for example about 1.25 mm. According to embodiments, the circular spur 47 protrudes less than the second frame 26 of the disc 21.

A first circular channel 45 is formed between the circular spur 47 and the stem 42.

A second circular channel 46 is formed in a radially outer position with respect to the circular spur 47. According to embodiments, the second circular channel 46 has a flat bottom. According to embodiments, the second circular channel 46 is delimited, radially, by a cathetus of the circular spur 47 and by an inclined wall 48 in the thickness of the head 41.

Advantageously, the support member 4 is made, at least partly, of a thermoplastic material, for example by means of injection moulding. Alternatively, it may be made of a composite material or a metallic material, such as aluminium or aluminium alloy.

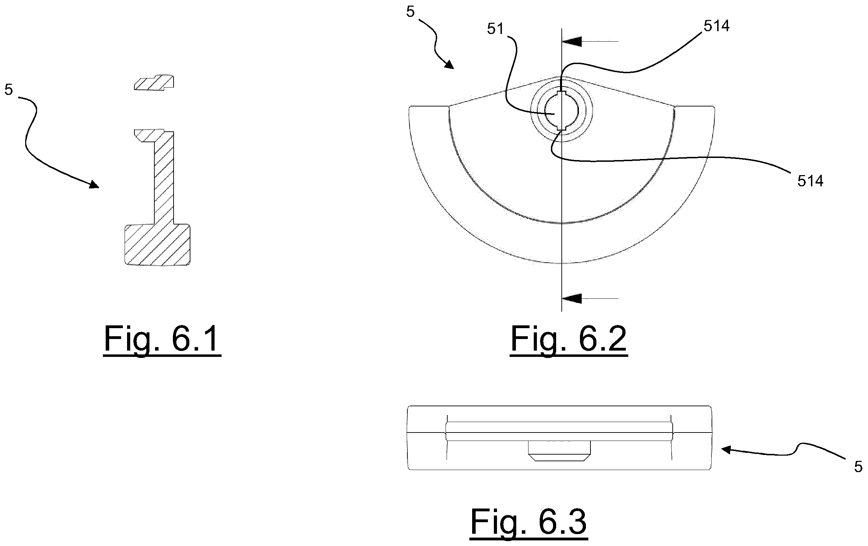

The eccentric mass 5 is shown in Figures 6.1, 6.2 and 6.3. It basically comprises a body having the shape of a circle sector with an angle of less than 180°. A mass is present along the circular edge. The eccentric mass 5 is configured to be integral with the stem 42 of support member 4. In fact, the eccentric mass 5 comprises a central hole 51 with two axial slots 514 for engagement with the mouldings 424 of the stem 42.

The hub cover device 1 according to the present invention may be mounted on the hub of a wheel in its completely assembled configuration or in a partially assembled configuration. In order to assemble the hub cover device the following steps are performed in the following order or in a different order: the bearing 3 is inserted inside the housing; the engagement member 2 is interposed between the eccentric mass 5 and the support member 4; the support member 4 is locked so as to be integral with the eccentric mass 5.

A logo may be applied to the outer face 411 of the support member 4 in any known manner, for example by means of gluing or riveting. The logo may be, for example, mounted on a support made of thermoplastic material or a support made of metallic material.

Owing to the shape and the eccentric position of the eccentric mass 5, the support member 4 tends to return into the desired initial position corresponding to the vertical position of the eccentric mass.

As shown in Figures 3.1 and 3.2, when the hub cover device 1 according to the present invention is assembled, the first circular frame 25 will be located inside the first circular channel 45, the second frame 26 will be located inside the second circular channel 46 and the circular spur 47 will be located inside the first circular cavity 27.

If foreign bodies (for example dust particles, dirt or moisture) enter from the periphery of the device 1, through the slit between the inner face 412 of the head 41 and the outer face 212 of the disc 21, they would be firstly blocked by the second frame 26 which forms a first barrier to entry of foreign bodies. If the foreign bodies should not be blocked by the second frame 26 and in any case continue radially towards the centre of the device 1, they would encounter a second barrier, formed by the circular spur 47. According to embodiments, the first circular frame 25 forms a third barrier against the entry of foreign bodies. This configuration is very effective and protects in an optimum manner the bearing from the entry of foreign bodies and/or moisture.

Obviously, when the wheel rotates, the engagement member also rotates. Owing to the centrifugal force and the slightly inclined shape of the inclined wall 48 of the second circular channel 48, second circular frame 26 and circular spur 47, the foreign bodies tend in any case to be expelled.

A further convenient feature consists in the fact that the first circular frame 25 ensures that any foreign body, even if it overcomes the three aforementioned barriers, reaches a position axially distant from the bearing 3. In fact, the housing of the bearing is more inwardly inset than the first circular frame 25 by a distance indicated by "d" in Fig. 3.2.

## Claims

1. A hub cover device (1) for a wheel of a vehicle, comprising:
- a hub engagement member (2) with a housing (23) for a bearing (3), the hub engagement member (2) comprising a disc (21) with an outer face (212) and an inner face (211);
- a support member (4) for supporting a logo, the support member (4) comprising a head (41) and a stem (42) and being configured to rotate freely relative to the engagement member (2); and
- an eccentric mass (5), configured to engage integrally with the stem (42) of the support member (4) and bring the support member (4) back into a predetermined position,
wherein a circular frame (25, 26) protrudes axially from the outer face (212) of the disc (21) of the engagement member (2), and
wherein a circular channel (45, 46) is formed in the inner face (412) of the head (41) of the support member (4) so as to accommodate the circular frame (25, 26) of the engagement member (2).

2. The hub cover device (1) of claim 1, wherein the circular channel (45, 46) comprises a surface (48) inclined radially outwards in the direction towards the engagement member (2).

3. The hub cover device (1) of claim 1 or 2, wherein the circular frame (25, 26) has a substantially triangular shape in cross-section and comprises a surface (261) inclined radially outwards in the direction of the support member (4).

4. The hub cover device (1) of claim 1, 2 or 3, further comprising a circular spur (47) protruding axially from the inner face (412) of the head (41) of the support member (4), and wherein the circular spur (47) is configured to engage inside a first circular cavity (27) of the disc (21) of the engagement member (2).

5. The hub cover device (1) of claim 4, wherein the circular spur (47) comprises a surface (471) inclined radially outwards in the direction of the engagement member (2).

6. The hub cover device (1) of claim 4 or 5, wherein the disc (21) of the engagement member (2) comprises a first circular frame (25) and a second circular frame (26) which delimit the first circular cavity (27).

7. The hub cover device (1) of claim 6, wherein the housing (23) protrudes from the inner face (211) of the disc (21) and wherein the first circular frame (25) protrudes from the outer face (212) of the disc (21) beyond the housing (23) of the bearing (3).

8. The hub cover device (1) of claim 6 or 7, wherein the first frame (25) has a substantially rectangular or square cross-section.

9. The hub cover device (1) of claim 6, 7, 8, wherein the first circular frame (25) has a width of between about 1 mm and about 2 mm.

10. The hub cover device (1) of any one of the preceding claims, wherein the stem (42) of the support member (4) terminates in a slotted free end (421) and wherein, near the free end of the stem (42), there are two diametrically opposite mouldings (424) configured to engage with two corresponding axial slots (514) in a central hole (51) of the eccentric mass (5).
